# EUROPÄISCHE PATENTSCHRIFT

(11) **EP 1 462 204 B1**
(45) Veröffentlichungstag und Bekanntmachung des Hinweises auf die Patenterteilung: **24.10.2007**
(21) Anmeldenummer: 04004480.2
(22) Anmeldetag: 27.02.2004
(51) Int. Cl.: B23K 11/25, B23K 11/31, G01N 29/22

(54) **Elektrodenhalterung für eine Widerstandsschweissmaschine mit integrietem Ultraschallsensor**
Electrode holder for a resistance welding machine with integrated ultrasound transducer
Porte-électrodes pour machine de soudage par résistance avec capteur à ultrasons intégré

(30) Priorität: 25.03.2003 DE 10313288
(43) Veröffentlichungstag der Anmeldung: 29.09.2004
(73) Patentinhaber: Bosch Rexroth AG, 70184 Stuttgart (DE)
(72) Erfinder: Platte, Michael, Dr., 42113 Wuppertal (DE); Müller, Heinz-Ullrich, 64720 Michelstadt (DE); Lach, Michael, Dr., 40699 Erkrath (DE); Arndt, Volker, 64711 Erbach (DE)

(56) Entgegenhaltungen:
- EP-A- 1 046 452
- WO-A-94/03799
- DE-A- 19 937 479
- US-A- 4 454 767
- US-A- 5 504 299

## Beschreibung

### Technisches Gebiet

Die Erfindung betrifft eine Halterungsvorrichtung einer Schweißanlage zum Widerstandsschweißen gemäß dem Oberbegriff des Anspruchs 1. Eine Solche Halterungsvorrichtung ist aus der DE 199 37 179 A1 bekannt.

### Stand der Technik

Zur Prozesssteuerung eines Schweißvorgangs, insbesondere zur Prozesssteuerung des Schweißvorgangs beim Widerstandspunktschweißen, hat es sich als in sehr guter Weise nutzbar herausgestellt, den zu schweißenden Bereich während des Schweißvorgangs mit Ultraschall zu durchschallen und die Schallabsorptionsrate bzw. den nach der Durchschallung verbleibenden Restschallpegel als Steuergröße für die Prozesssteuerung zu verwenden. Das grundlegende physikalische Verfahren hierzu ist in der internationalen Patentanmeldeschrift WO 94/03799 beschrieben. Wie hier ausgeführt ist, wird der Schweißbereich bzw. werden die Fügeteile während des Schweißvorgangs mit Scher- bzw. Transversalwellen durchschallt, indem an dem Elektrodenschaft einer ersten der beiden gegenüberliegenden Schweißelektroden ein Ultraschallsender zum Erzeugen von Ultraschallwellen und zum Einleiten dieser Schallwellen in den Elektrodenschaft in Richtung des Schweißbereichs angebracht ist. An dem Elektrodenschaft der zweiten Schweißelektrode, die der ersten Schweißelektrode gegenüberliegt, ist ferner ein Empfänger zum Empfangen des durch den Schweißbereich hindurchtretenden Ultraschalls angeordnet. Ausgehend von dem Ultraschallsender durchläuft das ausgesendete Ultraschallsignal als Körperschall den Elektrodenschaft der ersten Elektrode bis hin zum Schweißgut, beispielsweise zwei miteinander zu verschweißende Bleche, und durchdringt dieses, um anschließend über den Schaft der zweiten Elektrode zum Ultraschallempfänger zu gelangen. Der empfangene Schallpegel wird hier in ein elektrisches Signal umgewandelt und als Steuergröße zur Steuerung der Höhe des Schweißstroms, mit dem die Schweißelektroden beaufschlagt werden, dem Steuergerät als Eingangsgröße zugeführt.

Hierbei hat es sich herausgestellt, dass die Verwendung von transversalen Ultraschallwellen oder Ultraschallwellen mit hohem Transversalanteil zur Beurteilung des Schweißzustandes und zur Steuerung des Schweißvorgangs besonders gut geeignet sind. Transversale Ultraschallwellen werden beim Durchgang durch eine Flüssigkeitslinse, wie sie beim Schweißen als Schweißlinse aus dem aufgeschmolzenen Metall entsteht, besonders stark gedämpft. Somit ist auf der Basis der Messung der Dämpfung der ausgesendeten Ultraschallintensität eine zuverlässige Aussage über die Ausbildung und Größe der Schweißlinse möglich, die als Regelgröße für einen Steuerprozess zur Steuerung des Schweißvorgangs genutzt werden kann.

Ein wesentliches Kriterium für eine gute Durchführbarkeit des Verfahrens ist neben der Verwendung geeigneter Ultraschallwellen insbesondere auch die Art der Einleitung des Schalls in die Elektrode, die Schallausbreitung in den Elektroden und schließlich der Empfang des Schalls. In WO 94/03799 ist der Ultraschallsender und der Ultraschallempfänger hierzu an den Elektrodenschäften der Elektroden oder an den Elektrodenhaltern befestigt. Die Ultraschallsender und -empfänger sind hier Scherwellen-Prüfköpfe, die Piezoelemente enthalten und bei Anregung durch eine elektrische Spannung eine Scherbewegung ausführen oder umgekehrt bei Anregung durch eine Scherbewegung eine Empfangsspannung generieren. Um eine anteilig möglichst hohe Abstrahlung der Ultraschallwellen in Richtung des Schweißgutes sowie auch einen gerichteten Empfang der Schallwellen zu erzielen, wird in WO94/03799 vorgeschlagen, Vorsatzkeile unter den Sendern und Empfängern zu verwenden. Hierdurch wird eine Ausrichtung der Schallabstrahlung in Richtung der Mittelachse der Elektrode erzielt.
Nachteilig an der aus WO 94/03799 bekannten Anordnung ist jedoch, dass die Anordnung der Ultraschallsender und Ultraschallempfänger aufwendig zu konzipieren und zu realisieren ist. Für jede Anwendung sind eigens mit Sendern oder Empfängern versehene Elektrodenhalter oder Elektroden herzustellen.

In der Offenlegungsschrift DE 199 37 479 A1 ist eine Sensoranordnung beschrieben, bei der die Sensorträger Ausnehmungen zur Aufnahme des Senders oder Empfängers aufweisen und somit eine richtungsverbesserte Schalleinleitung bzw. einen richtungsverbesserten Schallempfang ermöglichen. In gleicher Weise wie oben ausgeführt muss jedoch jeder Sensorträger mit einem Sender und/oder einem Empfänger ausgestattet werden.

Um eine Vielzahl unterschiedlich geformter Bauteile schweißen zu können, werden üblicherweise eine Vielzahl von Elektroden unterschiedlicher Längen, Durchmesser und Formen sowie ebenso eine Vielzahl unterschiedlicher Elektrodenhalterungen verwendet. Dementsprechend müssen bei Realisierung der in der DE 199 37 479 A1 vorgeschlagenen Lösung eine Vielzahl von Elektroden und/oder Elektrodenhalterungen mit Sendern und Empfängern ausgestattet und vorrätig gehalten werden. Werden die Sender und Empfänger im Elektrodenschaft appliziert, können hier auch nicht mehr die handelsüblichen Elektrodenschäfte, die als einfache Drehteile kostengünstig herstellbar sind, verwendet werden. Im Falle einer Beschädigung des Elektrodenschaftes oder des Sensors muss zudem die gesamte Einheit bestehend aus Elektrodenschaft mitsamt Sensor ausgetauscht werden.

In einer noch nicht veröffentlichten deutschen Patentanmeldung des Anmelders wird hierzu vorgeschlagen, den Sender und Empfänger in einem ringförmigen, längsgeschlitzten Klemmelement anzuordnen, wobei das Klemmelement auf den zylindrischen Elektrodenschaft einer Elektrode aufgeschoben und hier mittels Klemmung des Längsschlitzes auf der Elektrode festgeklemmt werden kann. Hierdurch ist es möglich, beispielsweise die Elektrode auszutauschen, den Sender und Empfänger jedoch weiter zu verwenden, indem dieser einfach auf eine neue Elektrode montiert wird. Umgekehrt kann auch ein ausgefallener Sender oder Empfänger ausgetauscht, die Elektrode jedoch weiterhin verwendet werden.

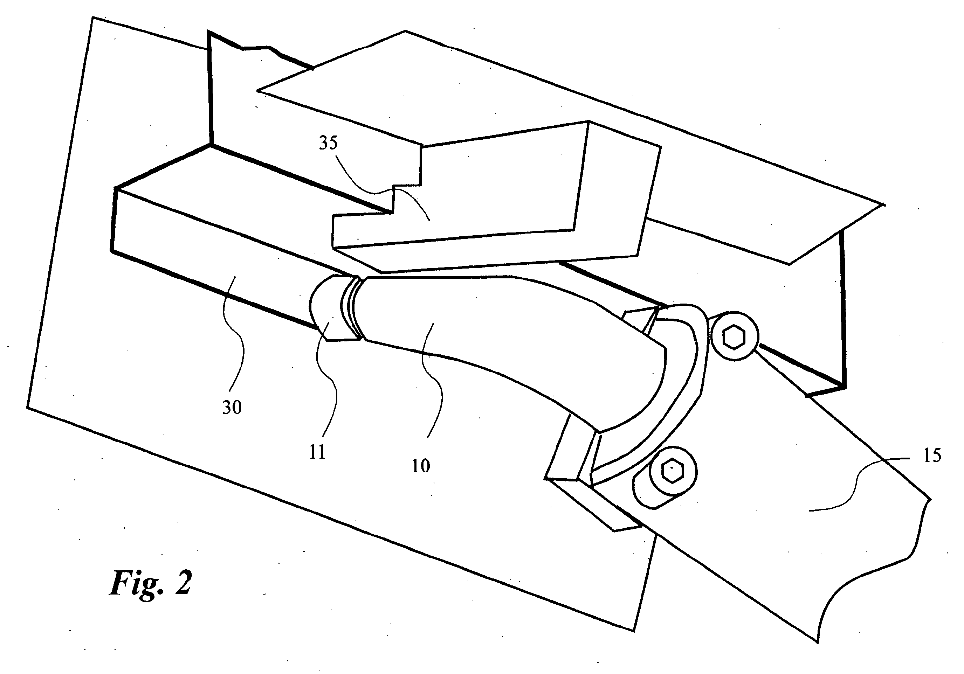

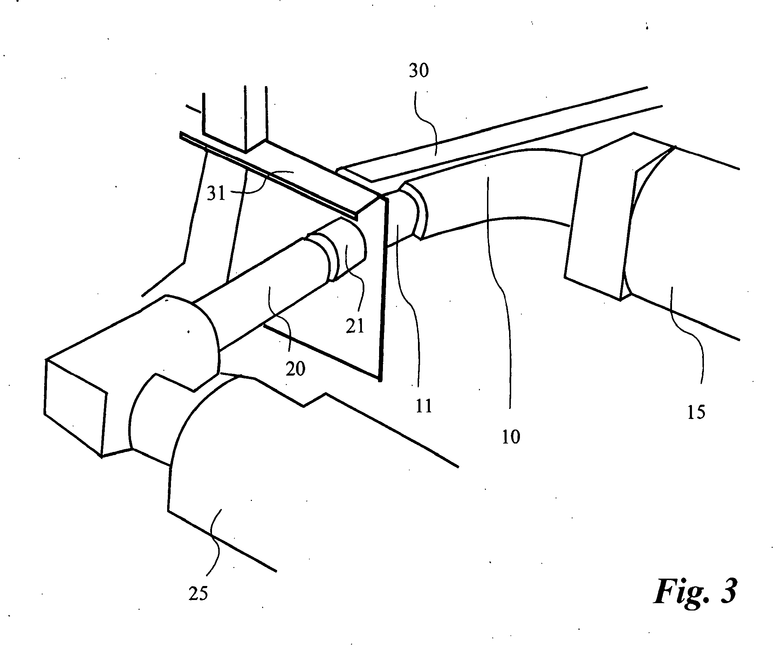

Als nachteilig an dieser Lösung hat sich jedoch herausgestellt, dass eine Anbringung eines Klemmelementes auf dem Schaft einer Schweißelektrode oftmals aufgrund der beengten, zur Verfügung stehenden Platzverhältnisse nicht möglich ist oder die Schweißung hierdurch erheblich behindert würde. So sind in den Figuren 2 und 3 Schweißsituationen dargestellt, bei denen der Abstand zu einem zu schweißenden Bauteil oder zu einem die zu schweißenden Bauteile halternden Spannelement sehr gering ist. Ein wie in der noch nicht veröffentlichten Patentanmeldung vorgeschlagenes, zusätzliches Klemmelement kann hier nicht eingesetzt werden.

### Darstellung der Erfindung

Es ist somit eine Aufgabe der Erfindung, eine Halterungsvorrichtung zur Halterung von Elektroden, insbesondere von Schweißelektroden zum Widerstandsschweißen, mit einem in der Halterungsvorrichtung integrierten Sensor, insbesondere einem Ultraschallsensor, unter Vermeidung der aus dem Stand der Technik bekannten Nachteile zur Verfügung zu stellen.
Insbesondere liegt der Erfindung die mehrteilige Aufgabe zugrunde, einen Sensor, insbesondere einen Ultraschallsensor so an einer Elektrodenhalterungsvorrichtung anzuordnen, dass die Elektrode leicht austauschbar ist, während ein und derselbe Sensor weiterverwendet werden kann. Ferner soll eine Vergrößerung des Bauvolumens der Gesamtanordnung durch die Anordnung des Sensors weitgehend vermieden werden. Insbesondere soll die Anordnung des Sensors keine Beeinträchtigung des Schweißarbeitsbereichs zur Folge haben. Darüber hinaus soll der Sensor zweckmäßig mit einem geringen Montageaufwand montierbar und demontierbar sein. Weiterhin sollen vorteilhaft die generierten Schallwellen auch ohne wesentliche Verluste in die Elektrode und von hier in Richtung des Schweißgutes bzw. der Fügeteile geleitet werden bzw. aus der Richtung des Schweißgutes empfangen werden können.

Diese Aufgaben werden erfindungsgemäß durch eine Halterungsvorrichtung gemäß Anspruch 1 gelöst. Weitere vorteilhafte Ausgestaltungen der Erfindung finden sich in den Unteransprüchen.

Die erfindungsgemäße Halterungsvorrichtung zum Verbinden und/oder Fixieren einer Elektrode mit einem Elektrodenarm einer Widerstandsschweißanlage, umfasst neben einem Grundkörper einen Sensor zur Einleitung von Ultraschallwellen in die Elektrode und/oder zum Empfang von Ultraschallwellen. Vorzugsweise handelt es sich bei den Ultraschallwellen um transversale Ultraschallwellen oder Ultraschallwellen mit überwiegend transversaler Komponente, insbesondere um Scherwellen und/oder Torsionswellen. Die erfindungsgemäße Halterungsvorrichtung stellt somit eine Weiterbildung von aus dem Stand der Technik bekannten Halterungsvorrichtungen dar, die im Stand der Technik zur Verbindung einer Elektrode mit einem Elektrodenarm und/oder zur Fixierung der Elektrode eingesetzt werden und erweitert die Funktionalität eines solchen, aus dem Stand der Technik bekannten Verbindungselements durch eine platzsparende Integration eines Ultraschallsensors an oder in dem Grundkörper der Halterungsvorrichtung. Durch die erfindungsgemäße Anordnung des Sensors in oder an dem Grundkörper der Halterungsvorrichtung ist es möglich, Ultraschallwellen über das Verbindungselement in die Elektrode oder den Elektrodenschaft einzuleiten bzw. Ultraschallwellen aus der Elektrode oder dem Elektrodenschaft über die Kopplung mit dem Verbindungselement zu empfangen. Der Platzbedarf der Gesamtanordnung umfassend einen Elektrodenarm, eine Elektrode, ein Verbindungselement und einen Sensor wird durch die erfindungsgemäße Anordnung des Verbindungselements im Vergleich zu den aus dem Stand der Technik bekannten Anordnungen ohne Sensoren nicht oder nur so geringfügig erhöht, dass hieraus keine nachteiligen Einschränkungen für den Arbeitsbereich resultieren. Auch können bei Verwendung eines erfindungsgemäßen Verbindungselements nach wie vor handelsübliche Elektroden in den Elektrodenarm eingesetzt werden. Es ist keine besondere Anpassung der jeweils eingesetzten Elektrode zur Aufnahme oder Halterung des Ultraschallsensors erforderlich, so dass hierdurch eine hohe Flexibilität der gesamten Schweißanlage bei gleichzeitig niedrigen Betriebskosten erzielt wird. Insbesondere kann auch bei Verwendung verschiedener Elektroden ein und derselbe Sensor zum Einsatz kommen, so dass auch hier keine kostenintensive Bevorratung einer Vielzahl von Sensoren erforderlich ist. Neben der Anordnung eines Sensors zur Einleitung von Ultraschallwellen in die Elektrode und/oder zum Empfang von Ultraschallwellen, bevorzugt von transversalen Ultraschallwellen oder Ultraschallwellen mit überwiegend transversaler Komponente, insbesondere von Scherwellen und/oder Torsionswellen, können alternativ oder auch zusätzlich vorteilhaft auch andere Sensoren in dem Verbindungselement angeordnet werden. Jedoch ist es besonders vorteilhaft, einen Ultraschallsensor zur Einleitung von Ultraschallwellen in die Elektrode oder zumindest den Elektrodenschaft in oder an dem Verbindungselement anzuordnen, da das Verbindungselement zur Fixierung der Elektrode unmittelbar an die Elektrode angrenzt. Hierdurch ist eine gute Übertragung der generierten Schallwellen von dem Verbindungselement in die Elektrode sichergestellt.
Im Rahmen der vorliegenden Beschreibung umfasst der Begriff Sensor sowohl einen Sender als auch einen Empfänger. Der Aufbau eines Senders entspricht oftmals weitgehend dem eines Empfängers. Unterschiede liegen hier oftmals nur in der nachgeschalteten Ansteuer- oder Auswerteelektronik vor.

Auch wird im Rahmen der vorliegenden Beschreibung der Begriff der Elektrode im Sinne eines Elektrodenschaftes verwendet. Es ist hierbei nicht unbedingt erforderlich, dass der Elektrodenschaft auch mit einer Elektrodenkappe ausgestattet ist.

Zur Bewertung des Schweißzustandes hat es sich als besonders zweckmäßig herausgestellt, Sensoren zu verwenden, die transversale Ultraschallwellen oder Ultraschallwellen mit überwiegend transversaler Komponente, insbesondere Scherwellen und/oder Torsionswellen erzeugen oder empfangen. Vorzugsweise werden hierzu Schallwellen mit einer Frequenz kleiner als 1 MHz erzeugt. Besonders vorteilhaft ist es, horizontal polarisierte Transversalwellen zu erzeugen, da diese eine geringe Neigung zu unerwünschten Modenumwandlungen bei Reflexionen innerhalb des schallführenden Elektrodenhalters haben. Bei den als Ultraschallsender oder Ultraschallempfänger verwendeten Sensoren handelt es sich vorzugsweise um sogenannte Scherwellen-Prüfköpfe. Sie enthalten ebene und zumeist runde Piezoplatten von einigen Millimetern bis einigen Zentimetern im Durchmesser, die bei Anregung mit einer elektrischen Spannung eine Scherbewegung ausführen oder umgekehrt im Empfangsfall auf eine empfangene Scherwelle mit einer Empfangsspannung reagieren. Vorzugsweise umfasst der Sensor auf seiner Rückseite zumindest eine schalldämmende und/oder reflektierende Schicht, um so eine gerichtete Abstrahlung der Schallwellen sicherzustellen. Auch können durch diese schalldämmende und/oder reflektierende Schicht keine Fremdschalleinflüsse von außen in den Sensor vordringen und hier zu einer Verfälschung des Schallsignals führen. Des weiteren ist es zweckmäßig, zwischen der piezoelektrischen Schicht des Sensors und dem Verbindungselement eine elektrisch isolierende, jedoch schallleitfähige Zwischenschicht vorzusehen.

Zweckmäßig wird der Sensor zur Einleitung von Ultraschallwellen in die Elektrode und/oder zum Empfang von Ultraschallwellen auf dem Grundkörper des Verbindungselements angeordnet. Hierbei kann der Sensor aufgeklebt oder auch formschlüssig gehaltert sein, wobei bei der Klebung oder anderweitigen Befestigung auf eine gute Übertragung der Schallwellen von dem Sensor auf das Verbindungselement zu achten ist. Eine Klebung ist vorzugsweise mit einem so hohen Anpressdruck vorzunehmen, dass sich nur eine kleine Klebeschichtdicke ausbildet, die vorzugsweise deutlich geringer als eine Wellenlänge der erzeugten Schallwellen ist.

Besonders zweckmäßig wird der Sensor in einer Aussparung des Grundkörpers des Verbindungselements angeordnet. Oftmals bietet sich zur Anordnung des Sensors eine der Stirnseiten, vorzugsweise die dem Elektrodenarm zugewandte Stirnseite des Verbindungselements, an. Durch eine solche Anordnung an der dem Elektrodenarm zugewandten Stirnseite ist gleichzeitig eine in Richtung des Schweißbereichs gerichtete Abstrahlung der Schallwellen sichergestellt. Vorzugsweise ist der Sensor so an dem Verbindungselement oder in dem Verbindungselement angeordnet, dass Ultraschallwellen in etwa parallel zur Längsachse der Elektrode oder unter einem Winkel kleiner als 20° zur Längsachse der Elektrode in die Elektrode eingebracht werden.

Das Verbindungselement ist als Klemmelement ausgeführt, das so mit einer Gegenplatte des Elektrodenarms, verbindbar ist, dass es die Elektrode mit dem Elektrodenarm in einem Klemmsitz fixiert.

Zweckmäßig ist das Verbindungselement aus einem Werkstoff hergestellt, der gleiche oder ähnliche akustische Eigenschaften aufweist wie ein Werkstoff der Elektrode. Hierdurch ist ein guter Übergang der Schallwellen von dem Verbindungselement auf die Elektrode und umgekehrt sichergestellt. Insbesondere kommt es hierdurch zu einer nur geringen Reflexion der Schallwellen beim Übergang von dem Verbindungselement auf die Elektrode und umgekehrt sowie zu einer nur geringen Modenumwandlung.

Üblicherweise umfasst die Halterungsvorrichtung zweckmäßig zwei Elektrodenarme mit jeweils einem Verbindungselement, wobei in einem der Verbindungselemente ein Sensor zur Einleitung von Ultraschallwellen in eine Elektrode und in dem anderen Verbindungselement ein Sensor zum Empfang von Ultraschallwellen angeordnet ist.

Zum Schweißen werden die Elektroden auf entgegengesetzten Seiten des Schweißgutes bzw. der Fügeteile an diesen positioniert.

In einer zweckmäßigen Ausgestaltung der erfindungsgemäßen Halterungsvorrichtung ist der Durchmesser des Elektrodenarms größer als der Durchmesser der Elektrode und der Elektrodenarm weist an einer Stirnseite eine Öffnung zur Aufnahme eines Abschnittes der Elektrode auf.

Besonders zweckmäßig weist der Elektrodenarm eine Gegenplatte auf, die vorzugsweise als kragförmige Verlängerung des Elektrodenarms ausgebildet ist, und mit der das Verbindungselement zur Klemmung der Elektrode vorzugsweise mittels Verschraubung verbindbar ist. Dies ermöglicht eine sehr kompakte Ausführung der erfindungsgemäßen Halterungsvorrichtung.

In einer weiteren vorteilhaften Ausführungsform wird ein zylinderförmiger Sensor verwendet der in einer Bohrung des Elektrodenarms oder des Verbindungselements montiert ist. Aufgrund der Form des Sensors ist eine geringe Materialabtragung bei dessen Montage erforderlich, wodurch die mechanische Stabilität des Elektrodenarms bzw. Verbindungselements verbessert wird.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1: eine aus dem Stand der Technik bekannte Anordnung eines in einem ringförmigen Aufsatzelement angeordneten Ultraschallsensors, wobei das Aufsatzelement auf einen Elektrodenschaft aufgeschoben ist;
- Figur 2: ein zu schweißendes Bauteil mit einem beengten Arbeitsbereich;
- Figur 3: ein weiteres zu schweißendes Bauteil mit einem beengten Arbeitsbereich;
- Figur 4: eine aus dem Stand der Technik bekannte Halterungsvorrichtung zur Halterung einer Elektrode;
- Figur 5: eine erfindungsgemäß ausgeführte Halterungsvorrichtung mit einem in einen Grundkörper eines Klemmelements integrierten Ultraschallsensor;
- Figur 6: eine Detaildarstellung der erfindungsgemäß ausgeführten Halterungsvorrichtung aus Figur 5.
- Figur 7: eine Detaildarstellung der erfindungsgemäß ausgeführten Halterungsvorrichtung mit einem zylinderförmigen Sensor.

In den Figuren sind nur die für das Verständnis der Erfindung wesentlichen Elemente und Bauteile dargestellt.
Gleiche oder gleichwirkende Bauteile oder Elemente sind in den Figuren überwiegend mit denselben Bezugszeichen versehen.

### Wege zur Ausführung der Erfindung

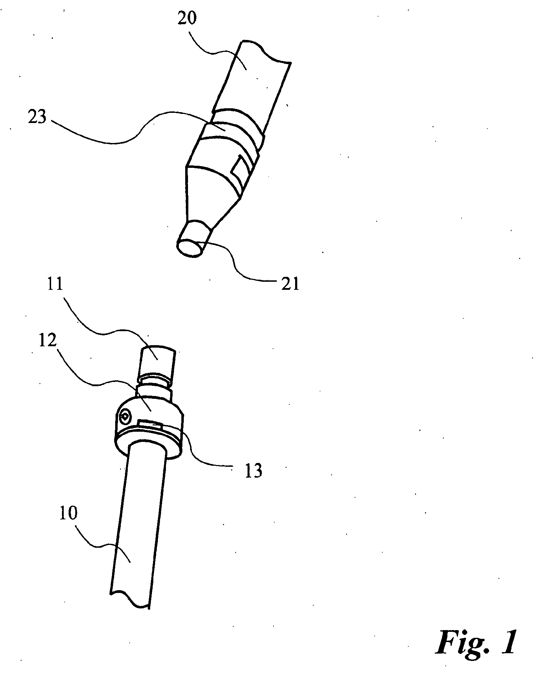

Figur 1 zeigt eine aus dem Stand der Technik bekannte Anordnung eines Ultraschallsensors 13, wobei der Ultraschallsensor 13 in ein ringförmiges Aufsatzelement 12 integriert ist und das Aufsatzelement 12 auf den zylindrischen Elektrodenschaft einer ersten Elektrode 10 aufgeschoben und hier festgeklemmt ist. Das Aufsatzelement 12 wird hierzu vorzugsweise nahe der Elektrodenkappe 11, die zuvorderst auf die Elektrode 10 aufgesteckt ist, angeordnet, um so den Leitungsweg für die ausgesendeten Ultraschallwellen bis hin zu den zu schweißenden Fügeteilen möglichst kurz zu halten. Die zu schweißenden Füge- oder Bauteile bzw. das Schweißgut wird in Figur 1 zwischen den Elektrodenkappen 11, 21 der ersten Elektrode 10 und einer zweiten Elektrode 20 positioniert. Um den durch das Schweißgut hindurchtretenden Ultraschall zu empfangen, ist an der zweiten, kegelförmig ausgebildeten Elektrode 20 am Kegelboden ein weiterer Ultraschallsensor 23 angeordnet, der hier als Empfänger arbeitet.
Wie der Darstellung aus Figur 1 deutlich zu entnehmen ist, ist aufgrund der Anordnung des ringförmigen Aufsatzelements 12 der Platzbedarf für die erste Elektrode 10 erheblich größer als ohne Anordnung des ringförmigen Aufsatzelements.

Soll nun an solchen Bauteilen eine Schweißung durchgeführt werden, die beispielsweise aufgrund von Hinterschneidungen oder anderen Bauteilüberhängen nur schwer zugänglich sind, so kann es zu der Situation kommen, dass das ringförmige Aufsatzelement 12 an ein Teil des zu schweißenden Bauteils anstößt und somit eine Schweißung nicht möglich ist. Hier muss das ringförmige Aufsatzelement 12 zunächst entfernt werden, um eine Schweißung zu ermöglichen. Diese Schweißung erfolgt dann jedoch wieder ohne Prozesssteuerung auf der Basis einer gemessenen Schallabsorption.
Figur 2 zeigt eine solche Schweißanordnung mit beengten Platzverhältnissen. Neben einer Winkelelektrode 10, deren Schaft in einem 90°-Bogen verläuft, ist hier eine Klemmung der Elektrode 10 in einem Elektrodenarm 15 als Halterungsvorrichtung dargestellt. In der hier dargestellten Schweißanordnung stößt die Elektrode 10 mit der Elektrodenkappe 11 an ihrem vorderen Ende an ein zu schweißendes Bauteil 30 an. Bei dem dargestellten Bauteil 30 handelt es sich um ein Winkelblech, das an seiner Rückseite mit einem Flachblech verschweißt werden soll. Das Winkelblech 30 wird zur Schweißung mit einem Spannelement 35 fixiert. Wie Figur 2 erkennen lässt, ist der Abstand zwischen der Elektrode 10 und dem Spannelement 35 so gering, dass hier eine zusätzliche Anordnung eines ringförmigen Aufsatzelementes, wie in Figur 1 dargestellt, nicht möglich wäre.
Auch die Anordnung aus Figur 3 zeigt eine weitere Schweißanordnung zum Widerstandsschweißen eines Bauteils mit beengten Platzverhältnissen. Dargestellt sind hier zwei Winkelbleche 30 und 31 , die in einem rechten Winkel miteinander zu verschweißen sind, wobei insbesondere die Schweißstelle auf der Seite des ersten Winkelblechs 30 nur schwer zugänglich ist. Hier wäre es wiederum nicht möglich, ein wie in Figur 1 dargestelltes Aufsatzelement zu verwenden.
Neben den Elektroden 10 und 20 sind in Figur 3 auch beide Elektrodenarme 15 und 25 zur Halterung der Elektroden zu erkennen.

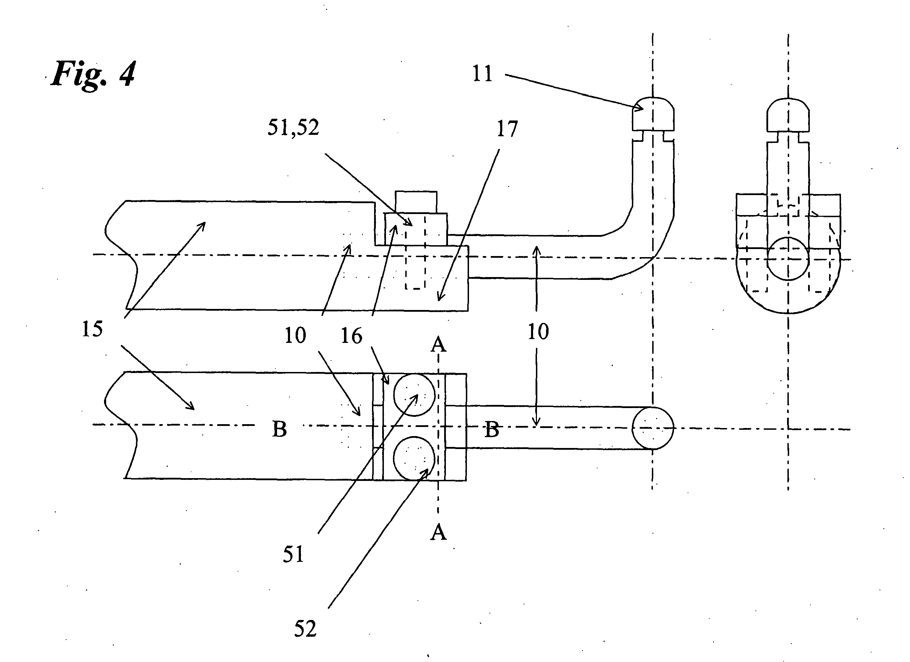

Figur 4 zeigt eine aus dem Stand der Technik bekannte Halterungsvorrichtung zur Halterung einer Schweißelektrode 10. Die Halterungsvorrichtung umfasst im wesentlichen einen zylindrischen Elektrodenarm 15, an dessen vorderer Stirnseite eine Bohrung zur Aufnahme eines Abschnittes der Elektrode 10 vorgesehen ist. Die in die Bohrung eingesteckte Elektrode 10 wird mittels eines Klemmstücks 16 fixiert. Hierzu wird das Klemmstück 16 mit einer Gegenplatte 17, die einteilig mit dem Elektrodenarm 15 ausgeführt ist und über die vordere Stirnseite des Elektrodenarms 15 heraussteht, verschraubt 51,52, wodurch es zu einer Klemmung der Elektrode 10 kommt. Das Klemmstück 16 sichert ferner den Elektrodenschaft 10 gegen Verdrehen und sorgt darüber hinaus für eine elektrische Kontaktierung zwischen dem Elektrodenarm 15 und dem Elektrodenschaft der Elektrode 10.
Auf das vordere Ende der Elektrode ist ferner eine auswechselbare Elektrodenkappe 11 aufgesteckt.

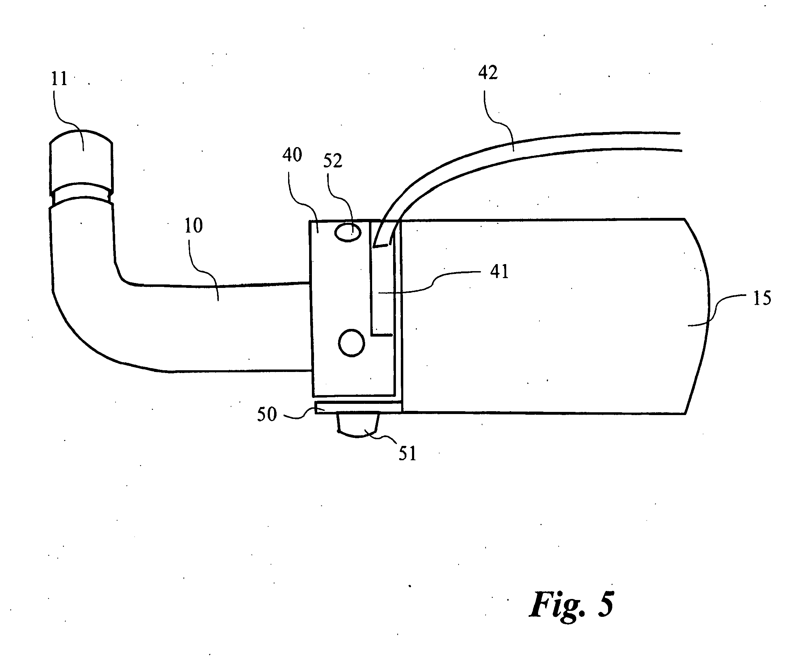

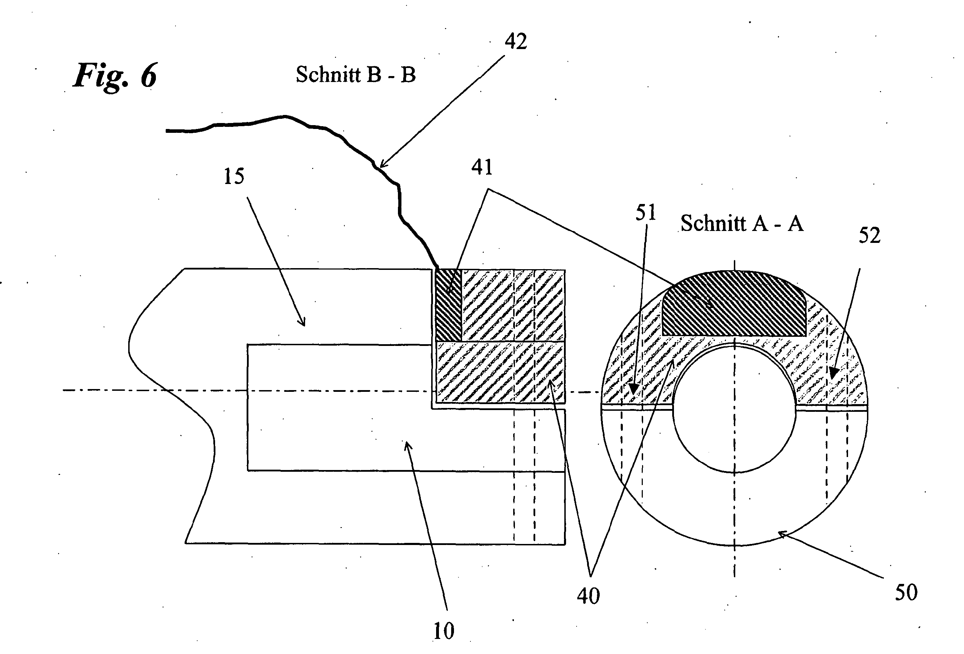

In Figur 5 ist eine erfindungsgemäß ausgeführte Halterungsvorrichtung dargestellt. Der Aufbau der Halterungsvorrichtung entspricht im wesentlichen den Ausführungen zu Figur 4, wobei hier zusätzlich ein Ultraschallsensor 41 in das als Klemmstück 40 ausgeführte Verbindungselement integriert ist. Figur 6 zeigt eine Detaildarstellung der erfindungsgemäß ausgeführten Halterungsvorrichtung aus Figur 5 und insbesondere des erfindungsgemäßen Klemmstücks 40.
Der Ultraschallsensor 41 ist hier in eine Materialaussparung des Grundkörpers des Klemmstücks 40 an der dem Elektrodenarm 15 zugewandten Stirnseite des Klemmstücks 40 eingelassen und hier verklebt. Ferner sind in den Figuren 5 und 6 die Leitungskabel 42 zur Leitung der elektrischen Signale und/oder der elektrischen Versorgungsspannung dargestellt.
Das Klemmstück 40 weist eine der Außenkontur der Elektrode 10 bzw. des Elektrodenschaftes angepasste Innenkontur auf und ist mittels einer Verschraubung, die hier zwei Schrauben 51 und 52 umfasst, mit einer Gegenplatte 50 verschraubt. Die Gegenplatte 50 ist hier als kragförmige Verlängerung des Elektrodenarms 15 einteilig mit dem Elektrodenarm 15 ausgeführt.
Die Außenkonturen des Grundkörpers des Klemmstücks 40 sowie des Ultraschallsensors 41 sind vorteilhaft entsprechend der Außenkontur des Elektrodenarms ausgeführt, so dass sich nach dem Zusammenbau eine stufenlose Außenkontur ergibt.

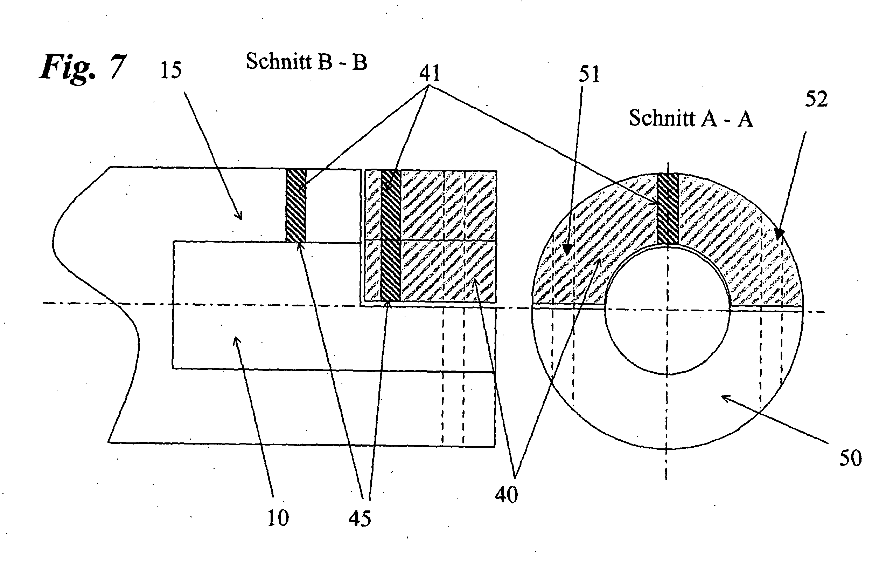

Figur 7 zeigt auch eine Detaildarstellung der erfindungsgemäß ausgeführten Halterungsvorrichtung aus Figur 5, und insbesondere des erfindungsgemäßen Klemmstücks 40 mit zylinderförmigem Sensor 41.
Infolge der Klemmung der Elektrode 10 durch das Klemmstück 40 kommt es zu einem unmittelbaren form- und kraftschlüssigen Kontakt des Klemmstücks 40 mit der Elektrode 10. Schallwellen, die von dem Ultraschallsensor 41 erzeugt werden, werden nahezu verlustlos über das Klemmstück 40 auf den Elektrodenschaft bzw. die Elektrode 10 übertragen und von hier zu dem Schweißgut weitergeleitet.

Die Anordnung des Ultraschallsensors 41 an der dem Elektrodenarm 15 zugewandten Stirnseite des Klemmstücks 40 ist hierbei vorteilhaft so gewählt, dass die Ultraschallwellen unter einem Winkel von etwa 15°- 20° zur Längsachse der Elektrode in die Elektrode eingebracht werden.

Da der Ultraschallsensor 41 in das Klemmstück 40 integriert ist, benötigt die erfindungsgemäße Vorrichtung im Vergleich zu der Anordnung aus Figur 1 insbesondere im Bereich der Elektroden 10 und 20 ein geringeres Bauvolumen. Die Elektroden 10 und 20 können somit auch bei verwinkelten Bauteilen oder bei beengten Platzverhältnissen aufgrund von Halterungsaufbauten oder sonstigen weiteren Bauteilen in gut handhabbarer Weise an dem zu schweißenden Bauteil positioniert werden. Dies bedeutet, dass bei Verwendung der erfindungsgemäßen Halterungsvorrichtung auch schwer zugängliche Stellen geschweißt werden können und gleichzeitig eine Überwachung des Schweißvorgangs auf der Basis der Durchleitung von Ultraschall durch die Schweißstelle erfolgen kann.

Auch ist es möglich, die zur Schweißung verwendete Elektrode auszutauschen und durch eine Elektrode mit anderer Geometrie zu ersetzen und hierbei weiterhin ein und denselben Ultraschallsensor zu verwenden. Umgekehrt kann im Falle eines Defektes des Ultraschallsensors die Elektrode weiterverwendet werden und es ist lediglich das Klemmstück mit dem hierin applizierten Ultraschallsensor auszutauschen.

Ein weiterer Vorteil der erfindungsgemäßen Anordnung des Ultraschallsensors an oder in dem Verbindungselement besteht darin, dass der Sensor außerhalb des Arbeitsbereichs angebracht ist, d.h. außerhalb desjenigen Bereichs, in dem Störkanten auftreten, an denen der Sensor insbesondere während des Zuführens oder Entfernens der Elektrode anstoßen und hierdurch zu Schaden kommen könnte.
Ferner unterliegt der erfindungsgemäß angeordnete Sensor im Vergleich zu einer Positionierung des Sensors im vorderen Bereich der Elektrode einer geringeren Verschmutzung. Auch tritt bei einem Wechsel der Elektrodenkappen keine Abnutzung oder ein mechanischer Verschleiß des Sensors oder der Halterungsvorrichtung auf.

### Bezugszeichenliste

- 10.: Elektrode
- 11.: Elektrodenkappe
- 12.: ringförmiges Aufsatzelement
- 13.: Ultraschallsensor
- 15.: Elektrodenarm
- 16.: Klemmstück
- 17.: Gegenplatte
- 20.: kegelförmige Elektrode
- 21.: Elektrodenkappe
- 23.: Ultraschallsensor
- 25.: Elektrodenarm
- 30.: Winkelblech
- 31.: Winkelblech
- 35.: Spannelement
- 40.: Klemmstück
- 41.: Ultraschallsensor
- 42.: Leistungskabel
- 45.: Sensor-Stirnseite
- 50.: Gegenplatte
- 51.: Schraube
- 52.: Schraube

## Patentansprüche

1. Halterungsvorrichtung zur Halterung von Schweißelektroden zum Widerstandsschweißen, mit einem Elektrodenarm (15) und einem Verbindungselement (40) zum Verbinden und/oder Fixieren einer Elektrode (10) mit einem Elektrodenarm (15) einer Widerstandsschweißanlage, wobei das Verbindungselement einen Grundkörper und einen Sensor (41) zur Einleitung von Ultraschallwellen in die Elektrode und/oder zum Empfang von Ultraschallwellen, bevorzugt von transversalen Ultraschallwellen oder Ultraschallwellen mit überwiegend transversaler Komponente, insbesondere von Scherwellen und/oder Torsionswellen, umfasst, **dadurch gekennzeichnet, dass**
das Verbindungselement ein Klemmelement (40) ist, das eine der Außenkontur der Elektrode (10) angepasste Innenkontur aufweist und mittels einer Verschraubung (51, 52) mit einer Gegenplatte (50) verbindbar ist, wobei die Gegenplatte (50) als kragförmige Verlängerung des Elektrodenarms (15) vorzugsweise einteilig mit dem Elektrodenarm (15) ausgeführt ist.

2. Halterungsvorrichtung nach Anspruch 1,
wobei der Sensor (41) zur Einleitung von Ultraschallwellen in die Elektrode und/oder zum Empfang von Ultraschallwellen auf dem Grundkörper des Verbindungselements angeordnet ist.

3. Halterungsvorrichtung nach einem der vorhergehenden Ansprüche,
wobei der Sensor (41) zur Einleitung von Ultraschallwellen in die Elektrode und/oder zum Empfang von Ultraschallwellen in einer Aussparung des Grundkörpers des Verbindungselements angeordnet ist.

4. Halterungsvorrichtung nach einem der vorhergehenden Ansprüche,
wobei das Verbindungselement aus einem Werkstoff hergestellt ist, der gleiche oder ähnliche akustische Eigenschaften aufweist wie ein Werkstoff der Elektrode.

5. Halterungsvorrichtung nach einem der vorhergehenden Ansprüche,
wobei der Sensor (41) zur Erzeugung und/oder zum Empfang der Ultraschallwellen ein Piezoelement umfasst.

6. Halterungsvorrichtung nach einem der vorhergehenden Ansprüche,
wobei der Sensor (41) so an dem Verbindungselement oder in dem Verbindungselement angeordnet ist, dass Ultraschallwellen in etwa parallel zur Längsachse der Elektrode (10) oder unter einem Winkel kleiner als 20° zur Längsachse der Elektrode (10) in die Elektrode (10) eingebracht werden.

7. Halterungsvorrichtung nach einem der vorhergehenden Ansprüche,
wobei die Frequenz der durch den Sensor (41) eingeleiteten oder empfangenen Ultraschallwellen kleiner als 1 MHz ist.

8. Halterungsvorrichtung nach einem der vorhergehenden Ansprüche,
wobei der Sensor zumindest eine schalldämmende und/oder eine reflektierende Schicht umfasst.

9. Halterungsvorrichtung nach einem der vorhergehenden Ansprüche,
wobei die Halterungsvorrichtung zwei Elektrodenarme mit jeweils einem Verbindungselement umfasst, wobei in einem Verbindungselement ein Sensor zur Einleitung von Ultraschallwellen in eine Elektrode und in dem anderen Verbindungselement ein Sensor zum Empfang von Ultraschallwellen angeordnet ist.

10. Halterungsvorrichtung nach Anspruch 9,
wobei der Durchmesser des Elektrodenarms (15) größer ist als der Durchmesser der Elektrode (10) und der Elektrodenarm (15) an einer Stirnseite eine Öffnung zur Aufnahme eines Abschnittes der Elektrode (10) aufweist.

11. Halterungsvorrichtung nach einem der Ansprüche 9 bis 10,
wobei der Elektrodenarm (15) eine Gegenplatte (50) umfasst, die vorzugsweise als kragförmige Verlängerung des Elektrodenarms (15) ausgebildet ist, mit der das Verbindungselement (40) zur Klemmung der Elektrode (10) vorzugsweise mittels einer Verschraubung (51, 52) verbindbar ist.

12. Halterungsvorrichtung nach einem der Ansprüche 9 bis 11, wobei der Sensor zylinderförmig ist, in einer Bohrung des Elektrodenarms (15) montiert ist, und mit seiner Stirnseite (45) die Elektrode (10) berührt.

## Claims

1. Holding device for holding welding electrodes for resistance welding, with an electrode arm (15) and a connecting element (40) for connecting and/or fixing an electrode (10) to an electrode arm (15) of a resistance welding installation, the connecting element comprising a base body and a sensor (41) for introducing ultrasonic waves into the electrode and/or for receiving ultrasonic waves, with preference transverse ultrasonic waves or ultrasonic waves with a predominantly transverse component, in particular shear waves and/or torsional waves, **characterized in that** the connecting element is a clamping element (40), which has an inner contour adapted to the outer contour of the electrode (10) and can be connected to a counter plate (50) by means of a screwed union (51, 52), the counter plate (50) being configured as a cantilever-like extension of the electrode arm (15), preferably in one piece with the electrode arm (15).

2. Holding device according to Claim 1, the sensor (41) for introducing ultrasonic waves into the electrode and/or for receiving ultrasonic waves being arranged on the base body of the connecting element.

3. Holding device according to one of the preceding claims, the sensor (41) for introducing ultrasonic waves into the electrode and/or for receiving ultrasonic waves being arranged in a clearance in the base body of the connecting element.

4. Holding device according to one of the preceding claims, the connecting element being produced from a material that has acoustic properties that are the same as or similar to a material of the electrode.

5. Holding device according to one of the preceding claims, the sensor (41) for generating and/or receiving the ultrasonic waves comprising a piezo element.

6. Holding device according to one of the preceding claims, the sensor (41) being arranged on the connecting element or in the connecting element in such a way that ultrasonic waves are introduced into the electrode (10) approximately parallel to the longitudinal axis of the electrode (10) or at an angle of less than 20° to the longitudinal axis of the electrode (10.).

7. Holding device according to one of the preceding claims, the frequency of the ultrasonic waves introduced or received by the sensor (41) being less than 1 MHz.

8. Holding device according to one of the preceding claims, the sensor comprising at least one sound-insulating and/or reflective layer.

9. Holding device according to one of the preceding claims, the holding device comprising two electrode arms, each with a connecting element, a sensor for introducing ultrasonic waves into an electrode being arranged in one connecting element and a sensor for receiving ultrasonic waves being arranged in the other connecting element

10. Holding device according to Claim 9, the diameter of the electrode arm (15) being greater than the diameter of the electrode (10) and the electrode arm (15) having on an end face an opening for receiving a portion of the electrode (10).

11. Holding device according to either of Claims 9 and 10, the electrode arm (15) comprising a counter plate (50), which is preferably formed as a cantilever-like extension of the electrode arm (15), to which the connecting element (40) can be connected for clamping the electrode (10), preferably by means of a screwed union (51, 52).

12. Holding device according to one of Claims 9 to 11, the sensor being cylindrical, being mounted in a bore of the electrode arm (15), and touching the electrode (10) with its end face (45).

## Revendications

1. Dispositif de support pour porter des électrodes de soudage par résistance, comprenant un bras d'électrode (15) et un élément de liaison (40) pour relier et/ou fixer une électrode (10) au bras d'électrode (15) d'une installation de soudage par résistance,
l'élément de liaison ayant un corps de base et un capteur (41) pour induire des ondes d'ultrasons dans l'électrode et/ou pour recevoir des ondes d'ultrasons, de préférence des ondes transversales d'ultrasons ou des ondes ayant principalement une composante transversale, notamment des ondes de cisaillement et/ou des ondes de torsion,
**caractérisé en ce que**
l'élément de liaison est un élément de pincement (40) ayant un contour intérieur adapté au contour extérieur de l'électrode (10) et relié à une contre-plaque (50),par une liaison vissée (51,52)
la contre-plaque (50) étant réalisée comme prolongement en forme de collerette du bras d'électrode (15) de préférence en une seule pièce avec le bras d'électrode (15).

2. Dispositif de support selon la revendication 1, dans lequel le capteur (41) est prévu pour induire les ultrasons dans l'électrode et/ou pour recevoir les ultrasons du corps de base de l'élément de liaison.

3. Dispositif de support selon l'une des revendications précédentes, dans lequel le capteur (41) est placé dans l'électrode pour induire des ondes d'ultrasons et/ou pour recevoir des ondes d'ultrasons dans une cavité du corps de base de l'élément de liaison.

4. Dispositif de support selon l'une des revendications précédentes, dans lequel l'élément de liaison est réalisé en une matière ayant les propriétés acoustiques identiques ou analogues à celles de la matière de l'électrode.

5. Dispositif de support selon l'une des revendications précédentes, dans lequel le capteur (11) comporte un élément piézo-électrique pour générer et/ou recevoir des ondes d'ultrasons.

6. Dispositif de support selon l'une des revendications précédentes, dans lequel le capteur (41) est monté sur l'élément de liaison ou dans l'élément de liaison, les ondes d'ultrasons sont induites dans l'électrode (10), sensiblement parallèlement à l'axe longitudinal de l'électrode (10) ou suivant un angle inférieur à 20 par rapport à l'axe longitudinal de l'électrode (10).

7. Dispositif de support selon l'une des revendications précédentes, dans lequel la fréquence des ondes d'ultrasons induites ou reçues par le capteur (41) est inférieure à 1 MHz.

8. Dispositif de support selon l'une des revendications précédentes, selon lequel le capteur comporte au moins une couche d'isolation phonique et/ou réfléchissante.

9. Dispositif de support selon l'une des revendications précédentes, selon lequel le dispositif de fixation comporte deux bras d'électrode ayant chacun un élément de liaison, et l'élément de liaison comporte un capteur pour induire des ondes d'ultrasons dans l'électrode et l'autre élément de liaison comporte un capteur pour recevoir des ondes d'ultrasons.

10. Dispositif de support selon la revendication 9, dans lequel le diamètre du bras d'électrode (15) est supérieur au diamètre de l'électrode (10) et la face frontale du bras d'électrode (15) comporte une ouverture pour recevoir un segment de l'électrode (10).

11. Dispositif de support selon l'une des revendications 9 à 10, dans lequel le bras d'électrode (15) comporte une contre-plaque (50), de préférence un prolongement en forme de collerette du bras d'électrode (15) par lequel l'élément de liaison (40) est relié pour serrer l'électrode (10), de préférence par une liaison vissée (51, 52).

12. Dispositif de support selon l'une des revendications 9 à 11, dans lequel le capteur est de forme cylindrique installé dans un perçage du bras d'électrode (15) et dont la face frontale (45) touche l'électrode (10).
